# EUROPEAN PATENT SPECIFICATION

(11) **EP 4 410 666 B1**
(45) Date of publication and mention of the grant of the patent: **18.03.2026**
(21) Application number: 24155120.9
(22) Date of filing: 31.01.2024
(51) Int. Cl.: B64C 3/42, B64C 3/56

(54) **FOLDING WINGS FOR AN AIRCRAFT**
FALTFLÜGEL FÜR EIN FLUGZEUG
AILE PLIABLE POUR UN AÉRONEF

(30) Priority: 31.01.2023 US 202318104220
(43) Date of publication of application: 07.08.2024
(73) Proprietor: Rohr, Inc., Chula Vista, CA 91910-2098 (US)
(72) Inventor: HABCHI, Jason, San Diego, 92117 (US); LE, Caitlin, Orange, 92867 (US); BARRAZA, Paul, Whittier, 90601 (US); KESTLER, Steven, San Diego, 92104 (US); GHANDOUR, Imad D., San Diego, 92122 (US)
(74) Representative: Dehns

(56) References cited:
- EP-A1- 3 121 115
- EP-A1- 3 604 124
- EP-A1- 3 805 096
- FR-A1- 3 098 190

## Description

### TECHNICAL FIELD

This invention relates generally to an aircraft and, more particularly, to wings of the aircraft.

### BACKGROUND

An aircraft may include foldable wings. Various types and configurations of foldable wings are known in the art. While these known foldable wings have various benefits, there is still room in the art for improvement. There is a need in the art therefore for improved foldable wings, particularly foldable wings that can meet both on ground and inflight requirements. The document EP3604124A1 discloses according to its abstract a vehicle including a fuselage having a longitudinal axis and a propulsion system that is coupled to the fuselage. The vehicle also includes a pair of articulated appendages that is coupled to the fuselage. Each one of the articulated appendages includes a plurality of airfoil segments and is moveable between a ground configuration, in which each one of the pair of articulated appendages supports the vehicle during takeoff or landing of the vehicle, and a flight configuration, in which each one of the pair of articulated appendages produces lift during flight of the vehicle. According to its abstract, the document EP3121115A1 relates to a coupling device for supporting a first wing section against a second wing section of an aircraft, that is configured for passive flight load alleviation and comprises a housing comprising a chamber, wherein the chamber comprises a first portion as well as a second portion and is filled with a fluid, a piston device movably arranged in the chamber, wherein the piston device separates the first portion from the second portion in a fluid tight manner, a first fluid pathway connecting the first portion to the second portion, a first pressure relief valve arranged in the first fluid pathway, wherein the first pressure relief valve blocks the first fluid pathway, if the pressure in the second portion is smaller than a first relief pressure and opens the first fluid pathway, if the pressure in the second portion is greater than the first relief pressure. In addition, the coupling device can be used to actuate the second wing section against the first wing section.

### SUMMARY

According to a first aspect of the present invention, there is provided a system for an aircraft as set forth in claim 1.

According to a further aspect of the present invention, there is provided an aircraft as set forth in claim 14.

According to a further aspect of the present invention, there is provided a method for operating an aircraft as set forth in claim 15.

The first acute angle may be less than fifteen degrees.

The first acute angle may be between fifteen degrees and thirty degrees.

The first acute angle may be greater than thirty degrees.

The first hinge line may be arranged parallel with the centerline.

The second hinge line may be angularly offset from (i.e. angled relative to) the centerline by a second acute angle.

The second acute angle may be equal to the first acute angle.

The system may also include a first actuation system configured to pivot the second section about the first hinge line between a first position and a second position. The second section may be arranged in-line with the first section when the second section is in the first position. The second section may be angularly offset from (i.e. angled relative to) the first section by a pivot angle when the second section is in the second position.

The pivot angle may be between thirty degrees and seventy degrees. The first actuation system may be configured to pivot the second section up to a maximum pivot angle of between thirty degrees and seventy degrees.

The pivot angle may be between seventy degrees and one-hundred and ten degrees. The first actuation system may be configured to pivot the second section up to a maximum pivot angle of between seventy degrees and one-hundred and ten degrees.

The first actuation system may be configured to lock the second section in at least one of the first position or the second position.

The system is configured such that the third section is arranged in-line with and fixed to second section when the second section pivots between the first position and the second position.

The system may also include a second actuation system configured to facilitate pivoting of the third section about the second hinge line between a first position and a second position. The third section may be arranged inline with the second section when the third section is in the first position. The third section may be angularly offset from (i.e. angled relative to) the second section by a pivot angle when the third section is in the second position.

The pivot angle may be greater than zero degrees and less than five degrees. The second actuation system may be configured to pivot the third section up to a maximum pivot angle of between zero degrees and five degrees.

The pivot angle may be between five degrees and twenty degrees. The second actuation system may be configured to pivot the third section up to a maximum pivot angle of between five degrees and twenty degrees.

The pivot angle may be between twenty degrees and forty-five degrees. The second actuation system may be configured to pivot the third section up to a maximum pivot angle of between twenty degrees and forty-five degrees.

The pivot angle may be greater than forty-five degrees. The second actuation system may be configured to pivot the third section up to a maximum pivot angle of greater than forty-five degrees.

The second actuation system may be configured to: lock the third section in the first position; and pivot the third section between the first position and the second position.

The second section may be arranged inline with and fixed to first section when the third section pivots between the first position and the second position.

The second actuation system may be configured to damp pivoting of the third section about the second hinge line.

The first and second actuation systems may be part of the same/a common actuation system.

The foregoing features and the operation of the invention will become more apparent in light of the following description and the accompanying drawings.

### BRIEF DESCRIPTION OF THE DRAWINGS

FIG. 1 is a front end illustration of an aircraft.
FIG. 2 is a top side illustration of the aircraft.
FIG. 3 is a front end illustration of a side of the aircraft with a wing in a fully extended configuration.
FIG. 4 is a front end illustration of the side of the aircraft with its wing in a collapsed configuration.
FIG. 5 is a front end illustration of the side of the aircraft with a wing in a semi-extended configuration.
FIG. 6 is a plan view illustration of a portion of the wing.
FIG. 7 is a schematic illustration of intermediate and tip wing sections arranged with a wing actuation system.
FIG. 8 is a flow diagram of a method for operating an aircraft.

### DETAILED DESCRIPTION

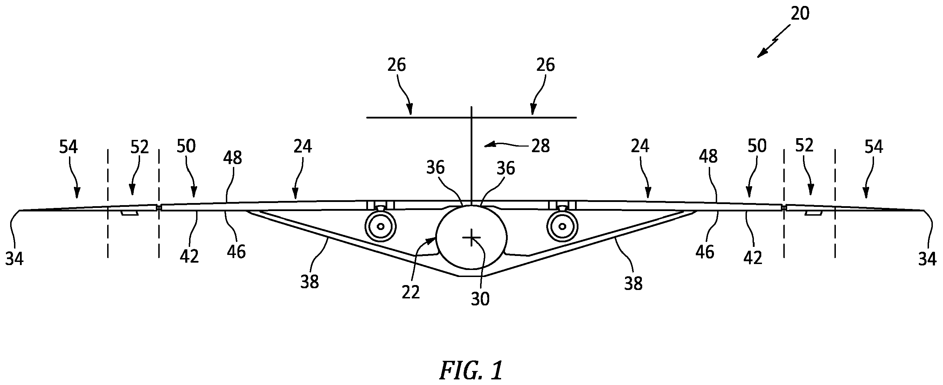

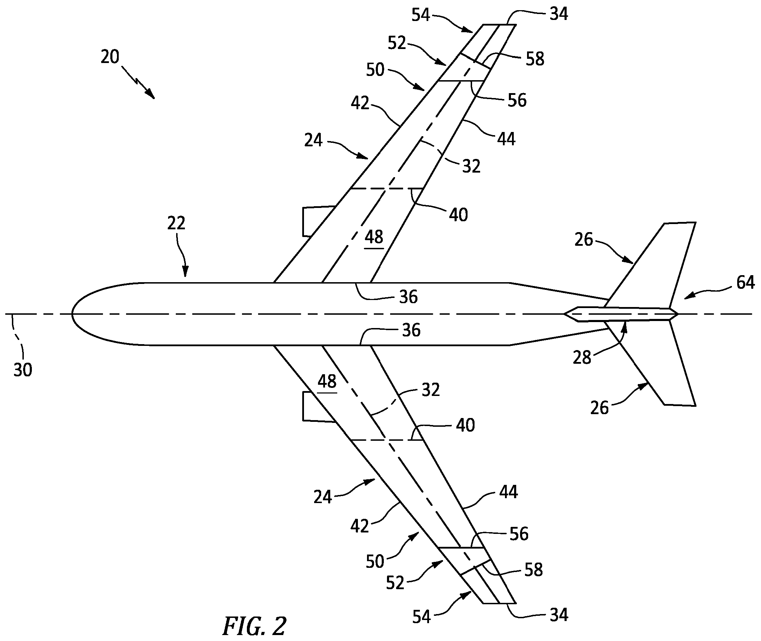

FIG. 1 is a front end illustration of an aircraft 20. FIG. 2 is a top side illustration of the aircraft 20. The aircraft 20 of FIGS. 1 and 2 is configured as a truss-braced, high aspect ratio wing airplane. The present invention, however, is not limited to such an exemplary aircraft. The aircraft 20, for example, may be configured as any type of low wing, mid wing or high wing aerial vehicle; e.g., airplane, drone, etc. The aircraft 20 of FIGS. 1 and 2 includes an aircraft fuselage 22 and one or more aircraft wings 24. The aircraft 20 may also include one or more stabilizers such as one or more horizontal stabilizers 26 and a vertical stabilizer 28.

The aircraft fuselage 22 extends longitudinally along a longitudinal centerline 30. This longitudinal centerline 30 may be a centerline of the aircraft 20 and/or the aircraft fuselage 22.

Referring to FIG. 2, the aircraft wings 24 are disposed on opposing sides of the aircraft fuselage 22. Each aircraft wing 24 projects spanwise along a span line 32 of the respective aircraft wing 24 out from the aircraft fuselage 22 to a tip 34 of the respective aircraft wing 24. More particularly, each aircraft wing 24 extends spanwise along its span line 32 from a base 36 of the respective aircraft wing 24 to its wing tip 34. Each aircraft wing 24 is connected to the aircraft fuselage 22 at (e.g., on, adjacent or proximate) its wing base 36. Each aircraft wing 24 of FIG. 1 is also connected to the aircraft fuselage 22 and supported by a truss brace 38.

Each aircraft wing 24 of FIG. 2 extends chordwise along a chord line 40 of the respective aircraft wing 24 between and to a leading edge 42 of the respective aircraft wing 24 and a trailing edge 44 of the respective aircraft wing 24. The leading edge 42 extends spanwise from the wing base 36 to the wing tip 34. The trailing edge 44 extends spanwise from the wing base 36 to the wing tip 34.

Each aircraft wing 24 of FIG. 1 extends laterally along a thickness of the respective aircraft wing 24 between and to a bottom, lower surface 46 of the respective aircraft wing 24 and a top, upper surface 48 of the respective aircraft wing 24. The wing lower surface 46 is disposed below the wing upper surface 48 (with respect to gravity) when, for example, the aircraft 20 is on ground and/or during normal horizontal flight. Referring to FIG. 2, each wing surface 46, 48 may extend spanwise from the wing base 36 to the wing tip 34. Each wing surface 46, 48 may extend chordwise from the wing leading edge 42 to the wing trailing edge 44. When each aircraft wing 24 is fully extended as shown in FIGS. 1 and 2, each wing surface 46, 48 may be substantially continuous without, for example, any interior corners, exterior corners and/or sharp (e.g., small radius) bends particularly when viewed in a first reference plane perpendicular to the longitudinal centerline 30; e.g., plane of FIG. 1.

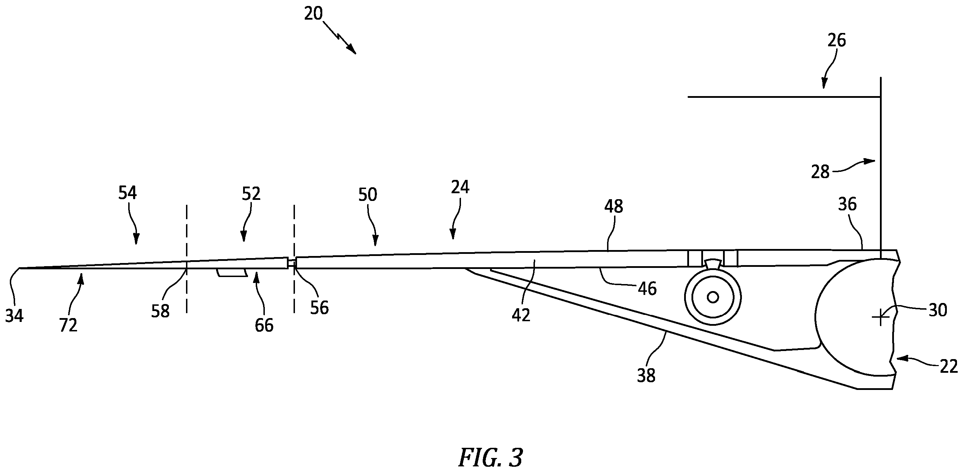

Referring to FIG. 3, each aircraft wing 24 includes a plurality of wing sections such as, but not limited to, a base section 50, an inner intermediate section 52 and an outer tip section 54. Each of these wing sections 50, 52, 54 forms a segment of the respective aircraft wing 24 along the span line 32 (see FIG. 2). The base section 50 of FIG. 3, for example, forms a segment of the respective aircraft wing 24 projecting spanwise out from the aircraft fuselage 22 to the intermediate section 52. This base section 50 may account for between thirty percent (30%) and sixty percent (60%) or between sixty percent (60%) and ninety percent (90%) of a span length of the respective aircraft wing 24. The intermediate section 52 of FIG. 3 forms a segment of the respective aircraft wing 24 extending spanwise between a spanwise outer end of the base section 50 and a spanwise inner end of the tip section 54. This intermediate section 52 may account for between five percent (5%) and ten percent (10%) or between ten percent (10%) and forty percent (40%) of the wing span length. The tip section 54 of FIG. 3 forms a segment of the respective aircraft wing 24 projecting spanwise out from the intermediate section 52 to the wing tip 34. This tip section 54 may account for between five percent (5%) and fifteen percent (15%) or between fifteen percent (15%) and thirty percent (30%) of the wing span length. The present invention, however, is not limited to the foregoing exemplary dimensional relationships.

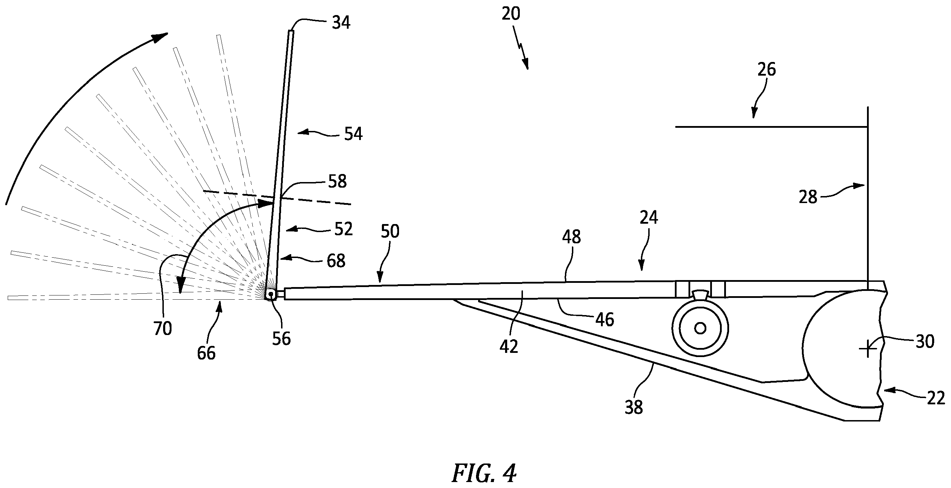

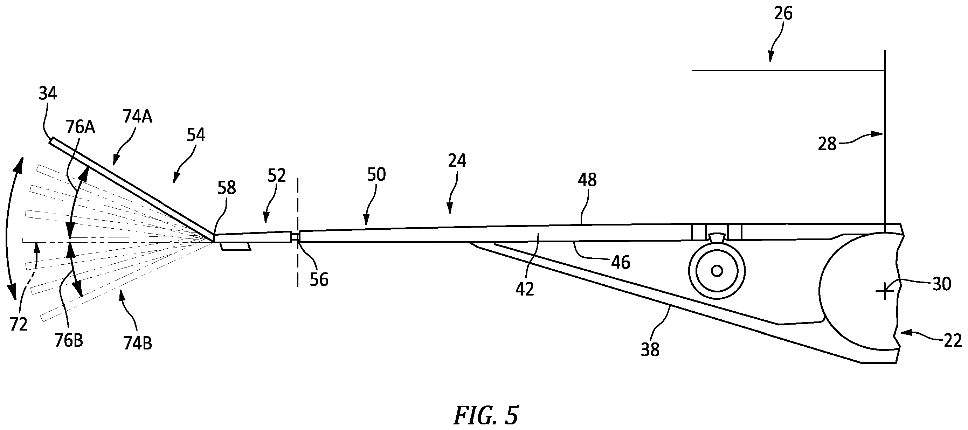

Each of the wing sections 50, 52, 54 may be configured as a unitary, rigid structure. By contrast, the wing sections 50, 52 and 54 provide the respective aircraft wing 24 with a multi-section, foldable or otherwise deformable structure. The base section 50 of FIGS. 3-5, for example, is fixedly attached to the aircraft fuselage 22. Thus, the base section 50 remains stationary relative to the aircraft fuselage 22 during aircraft operation. By contrast, referring to FIGS. 3 and 4, the intermediate section 52 is movably connected to the base section 50. The intermediate section 52 of FIGS. 3 and 4, for example, is pivotally connected to the base section 50 via an inner hinge and/or another pivotable joint at an inner hinge line 56; e.g., an inner pivot axis. Similarly, referring to FIGS. 3 and 5, the tip section 54 is movably connected to the intermediate section 52. The tip section 54 of FIG. 3 and 5, for example, is pivotally connected to the intermediate section 52 via an outer hinge and/or another pivotable joint at an outer hinge line 58; e.g., an outer pivot axis.

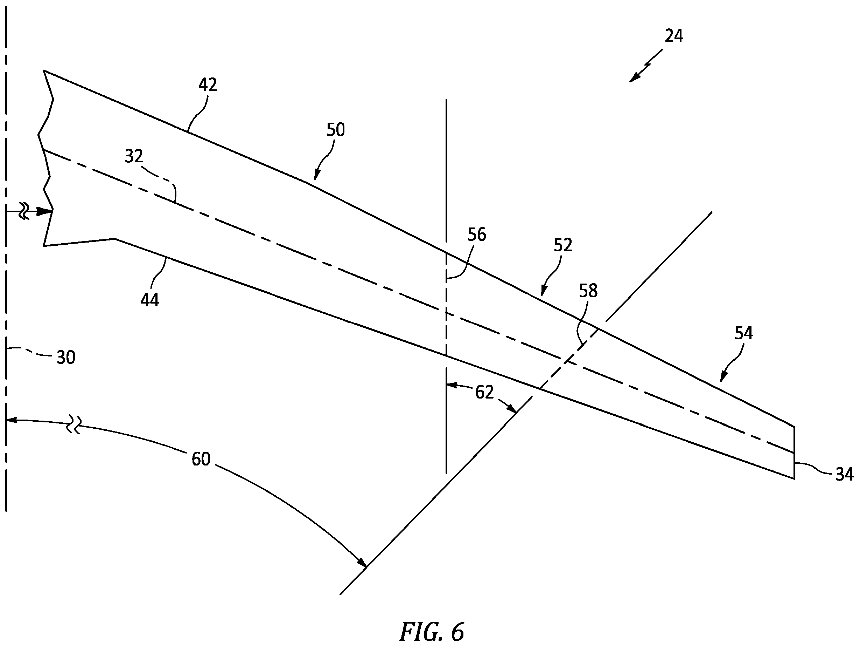

Referring to FIG. 6, the inner hinge line 56 may be arranged parallel with the longitudinal centerline 30 when viewed, for example, in a second reference plane parallel with (e.g., including) the longitudinal centerline 30; e.g., plane of FIG. 6. It is contemplated, however, in other embodiments the inner hinge line 56 may alternatively be angularly offset from the longitudinal centerline 30 by an inner hinge line angle; e.g., a non-zero acute angle up to five, ten or fifteen degrees (5°, 10° or 15°). Referring again to FIG. 6, the outer hinge line 58 is angularly offset from the longitudinal centerline 30 by a first outer hinge line angle 60. This first outer hinge line angle 60 may be a non-zero acute angle, for example, less than fifteen degrees (15°), between fifteen degrees (15°) and thirty degrees (30°), or greater than thirty degrees (30°). The outer hinge line 58 is also angularly offset from the inner hinge line 56 by a second outer hinge line angle 62. This second outer hinge line angle 62 may be equal to or different (e.g., slightly greater or less) than the first outer hinge line angle 60. The second outer hinge line angle 62 may be a non-zero acute angle, for example, less than fifteen degrees (15°), between fifteen degrees (15°) and thirty degrees (30°), or greater than thirty degrees (30°). The outer hinge line 58 of FIG. 6 is oriented such than a portion of the outer hinge line 58 at the wing leading edge 42 is positioned further away from the aircraft fuselage 22 (see FIG. 2) and the longitudinal centerline 30 than a portion of the outer hinge line 58 at the wing trailing edge 44; e.g., as measured in a direction perpendicular to the longitudinal centerline 30. The outer hinge line 58 may thereby be canted (e.g., angled) inwards towards a tail end 64 of the aircraft 20 (see FIG. 2).

Referring to FIGS. 3 and 4, the intermediate section 52 is movable (e.g., pivotable) between a first position 66 and a second position 68. At the intermediate section first position 66 of FIG. 3, the intermediate section 52 may be arranged inline with the base section 50. The intermediate section 52, for example, may be parallel with the base section 50 when viewed, for example, in the first reference plane. The intermediate section 52 may thereby be configured as a spanwise extension of the base section 50. By contrast, at the intermediate section second position 68 of FIG. 4, the intermediate section 52 may be angularly offset from the base section 50 by an inner hinge line pivot angle 70; e.g., measured along a path of movement. This inner hinge line pivot angle 70 may be a non-zero acute angle, a right angle or an obtuse angle. The inner hinge line pivot angle 70, for example, may be between thirty degrees (30°) and seventy degrees (70°), between seventy degrees (70°) and one-hundred and ten degrees (110°), or more than one-hundred and ten degrees (110°). The aircraft wing 24 may thereby be bent at an intersection between the base section 50 and the intermediate section 52. The present invention, however, is not limited to the foregoing exemplary angular relationships.

Referring to FIGS. 3 and 5, the tip section 54 is movable (e.g., pivotable) between a first position 72 and a second position 74A and/or 74B (generally referred to as "74"). At the tip section first position 72 of FIG. 3, the tip section 54 may be arranged inline with the intermediate section 52 (and the base section 50). The tip section 54, for example, may be parallel with the intermediate section 52 (and the base section 50) when viewed, for example, in the first reference plane. The tip section 54 may thereby be configured as a spanwise extension of the intermediate section 52 (and the base section 50). By contrast, at the tip section second position 74 of FIG. 5, the tip section 54 may be angularly offset from the intermediate section 52 (and the base section 50) by an outer hinge line pivot angle 76A, 76B (generally referred to as "76"); e.g., measured along a path of movement. This outer hinge line pivot angle 76 may be a non-zero acute angle. The outer hinge line pivot angle 76, for example, may be between five degrees (5°) and twenty degrees (20°), between twenty degrees (20°) and forty-five degrees (45°), or more than forty-five degrees (45°). Note, while the foregoing exemplary angles are described as positive angles, it is also contemplated these same angles may alternatively be negative angles. The aircraft wing 24 may thereby be bent at an intersection between the intermediate section 52 and the tip section 54. The present invention, however, is not limited to the foregoing exemplary angular relationships.

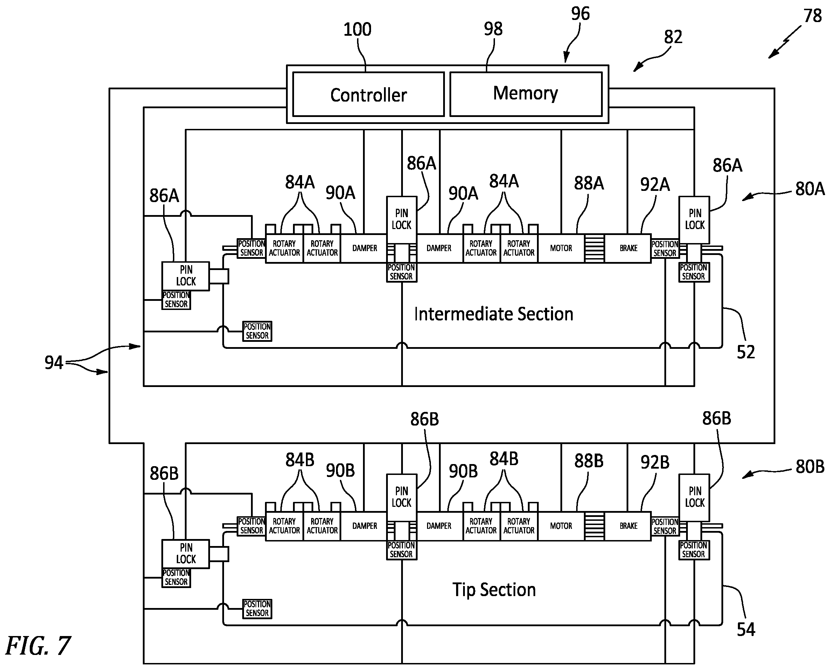

Referring to FIG. 7, to control movement of the various wing sections 52 and 54, each aircraft wing 24 is provided with a wing actuation system 78. This wing actuation system 78 includes an intermediate section actuation system 80A and a tip section actuation system 80B. The wing actuation system 78 also includes a control system 82 to control and/or coordinate operation of the intermediate section actuation system 80A and the tip section actuation system 80B.

Each wing section actuation system 80A, 80B (generally referred to as "80") of FIG. 7 includes one or more rotary actuators 84A, 84B (generally referred to as "84") and one or more lock devices 86A, 86B (generally referred to as" 86"). The rotary actuators 84 are configured to pivot the respective wing section 50, 52 about its hinge line 56, 58. One or more or all of the rotary actuators 84A, 84B, for example, may be coupled to a motor 88A, 88B (generally referred to as "88"), where the motor 88 drives operation of the rotary actuators 84 and, thus, pivoting of the respective wing section 52, 54. Examples of the motor 88 include, but are not limited to, an electric motor and a hydraulic motor. The lock devices 86, by contrast, are configured to fix a position of the respective wing section 52, 54 about its hinge line 56, 58. The lock devices 86A of the intermediate section actuation system 80A, for example, may lock (e.g., rotationally fix) the intermediate section 52 in its first position 66 of FIG. 3 and/or its second position 68 of FIG. 4. The lock devices 86A of the intermediate section actuation system 80A, however, may be unlocked to facilitate pivoting the intermediate section 52 by the rotary actuators 84 between the first position 66 of FIG. 3 and the second position 68 of FIG. 4. In another example, the lock devices 86B of the tip section actuation system 80B may lock (e.g., rotationally fix) the tip section 54 in its first position 72 of FIG. 3. The lock devices 86B of the tip section actuation system 80B, however, may be unlocked to facilitate pivoting of the tip section 54 about its outer hinge line 58 when not in the first position 72 of FIG. 3, or when not intended to remain fixed in the first position 72 of FIG. 3. The pivoting of the tip section 54 about its outer hinge line 58 may be active movement driven by the rotary actuators 84B. Alternatively, the pivoting of the tip section 54 about its outer hinge line 58 may be passive (e.g., free) movement driven by movement of the tip section 54 through air during aircraft flight.

Each wing section actuation system 80A, 80B may also include one or more dampers 90A, 90B (generally referred to as "90") and/or at least one brake 92A, 92B (generally referred to as "92"). The dampers 90 are configured to damp pivoting of the respective wing section 52, 54 about its hinge line 56, 58. The brake 92 is configured to brake (e.g., slow or stop) pivoting of the respective wing section 52, 54 about its hinge line 56, 58. For example, the brake 92 may be used to stop and hold the respective wing section 52, 54 in position while the lock devices 86 are engaged; e.g., locked. Alternatively, it is contemplated the lock devices 86 may be omitted and the brake 92 may be used to hold the position of the respective wing section 52, 54.

The control system 82 includes a sensor system 94 and a controller 96. The sensor system 94 is configured to monitor a rotational position of each wing section 52, 54 about its respective hinge line 56, 58. The sensor system 94, for example, may include one or more position sensors arranged with each respective wing section 52, 54. The sensor system 94 may also include one or more position sensors arranged with the lock devices 86 configured to monitor operation of the lock devices 86.

The controller 96 is in signal communication (e.g., hardwired and/or wirelessly coupled) with one or more of the wing actuation system elements 80 and 94. The controller 96 may be implemented with a combination of hardware and software. The hardware may include memory 98 and at least one processing device 100, which processing device 100 may include one or more single-core and/or multi-core processors. The hardware may also or alternatively include analog and/or digital circuitry other than that described above.

The memory 98 is configured to store software (e.g., program instructions) for execution by the processing device 100, which software execution may control and/or facilitate performance of one or more operations such as those described below. The memory 98 may be a non-transitory computer readable medium. For example, the memory 98 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

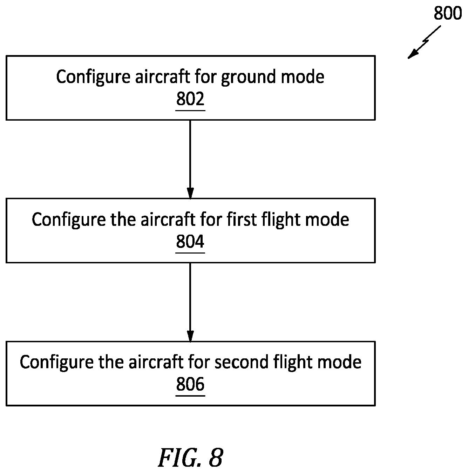

FIG. 8 is a flow diagram of a method 800 for operating an aircraft. For ease of description, the operating method 800 is described below with respect to the aircraft 20 of FIGS. 1-7. The operating method 800 of the present invention, however, is not limited to such an exemplary aircraft and aircraft wings.

In step 802, during a ground mode of operation, the aircraft 20 is configured for operation at an airport; e.g., on ground operation. The control system 82, for example, may signal the wing section actuation systems 80 to arrange the wing sections 52 and 54 into the collapsed / compact configuration of FIG. 4. In particular, each intermediate section 52 is pivoted to and locked in its second position 68. Each tip section 54 may be maintained inline with and rotational fixed with the respective intermediate section 52. With this arrangement, an effective wingspan of the aircraft 20 may be reduced (e.g., minimized) to facilitate easier maneuvering and/or parking of the aircraft 20 at the airport. The aircraft wings 24, for example, may be arranged with the collapsed / compact configuration of FIG. 4 for taxiing about the airport and/or parking at a terminal gate.

In step 804, during a first flight mode of operation, the aircraft 20 is configured for flight under a first set of conditions; e.g., normal flight conditions. The control system 82, for example, may signal the wing section actuation systems 80 to arrange the wing sections 52 and 54 into the deployed / fully extended configuration of FIG. 3. In particular, each intermediate section 52 is pivoted to and locked in its first position 66. Each tip section 54 may be maintained inline with and rotationally fixed with the respective intermediate section 52 in its first position 72. With this arrangement, the effective wingspan may be increased (e.g., maximized) to facilitate improved flight capability. The aircraft wings 24, for example, may be arranged with the deployed / fully extended configuration of FIG. 3 for aircraft takeoff, climb, cruise, descent and/or landing. Of course, it is contemplated each tip section 54 may alternatively be unlocked and allowed to passively pivot about the outer hinge line 58 as described below where, for example, the aircraft 20 experiences unusual conditions during the aircraft takeoff, climb, cruise, descent and/or landing.

In step 806, during a second flight mode of operation, the aircraft 20 is configured for flight under a second set of conditions; e.g., unusual flight conditions. The control system 82, for example, may signal the wing section actuation systems 80 to arrange the wing sections 52 and 54 into the semi-extended / modified configuration of FIG. 5. In particular, each intermediate section 52 may be maintained inline with and rotationally fixed with the respective base section 50 in its first position 66. Each tip section 54, on the other hand, may be unlocked and allowed to passively (e.g., freely, without use of the rotary actuators 84) pivot about the outer hinge line 58 from its first position 72 to its second position 74, from its second position 74 to its first position 72, between the second positions 74A and 74B, or anywhere in between. With this arrangement, the tip sections 54 may facilitate a more stable flight condition through high gusting winds and/or facilitate a more stable flight condition during relatively rapid aircraft maneuvers; e.g., tight turns, etc. Of course, it is contemplated the tip sections 54 may alternatively be actively moved to the second position 74 (and/or one or more intermediate positions) and/or locked in the second position 74 (and/or one or more intermediate positions) for certain flight conditions. The tip sections 54, for example, may alternatively function as fixed winglets.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Accordingly, the present invention is not to be restricted except in light of the attached claims.

## Claims

1. A system for an aircraft, comprising:
an aircraft fuselage (22) extending longitudinally along a centerline (30); and
an aircraft wing (24) connected to and extending spanwise from the aircraft fuselage (22) from a wing base (36) to a wing tip (34), the aircraft wing (24) extending chordwise from a leading edge (42) to a trailing edge (44), the aircraft wing (24) extending laterally between a first surface (46) and a second surface (48), and the aircraft wing (24) including a first section (50), a second section (52) and a third section (54);
the first section (50) projecting spanwise out from the aircraft fuselage (22);
the second section (52) extending spanwise between and connecting the third section (54) and the first section (50), the second section (52) pivotally connected to first section (50) at a first hinge line (56); and
the third section (54) pivotally connected to the second section (52) at a second hinge line (58) that is angularly offset from the first hinge line (56) by a first acute angle (62);
**characterized in that** the first section (50) is supported by a truss brace (38), the truss brace (38) extending between and connected to the first section (50) and the fuselage (22).

2. The system of claim 1, wherein the first acute angle (62) is less than fifteen degrees.

3. The system of claim 1, wherein the first acute angle (62) is between fifteen degrees and thirty degrees.

4. The system of claim 1, wherein the first acute angle (62) is greater than thirty degrees.

5. The system of any preceding claim, wherein the first hinge line (56) is arranged parallel with the centerline (30).

6. The system of any preceding claim, wherein the second hinge line (58) is angularly offset from the centerline (30) by a second acute angle (60), optionally wherein the second acute angle (60) is equal to the first acute angle (62).

7. The system of any preceding claim, further comprising a first actuation system (80A) configured to pivot the second section (52) about the first hinge line (56) between a first position (66) and a second position (68), wherein:
the second section (52) is arranged in-line with the first section (50) when the second section (52) is in the first position (66); and
the second section (52) is angularly offset from the first section (50) by a first pivot angle (70) when the second section (52) is in the second position (68), optionally wherein:
the first pivot angle (70) is between thirty degrees and seventy degrees; or
the first pivot angle (70) is between seventy degrees and one-hundred and ten degrees.

8. The system of claim 7, wherein the first actuation system (80A) is configured to lock the second section (52) in the first position (66) and/or the second position (68).

9. The system of claim 7 or 8, wherein the third section (54) is arranged in-line with and fixed to the second section (52) when the second section (52) pivots between the first position (66) and the second position (68).

10. The system of any preceding claim, further comprising a second actuation system (80B) configured to facilitate pivoting of the third section (54) about the second hinge line (58) between a first position (72) and a second position (74), wherein:
the third section (54) is arranged in-line with the second section (52) when the third section (54) is in the first position (72); and
the third section (54) is angularly offset from the second section (52) by a second pivot angle (76) when the third section (54) is in the second position (74), optionally wherein:
the second pivot angle (76) is between five degrees and twenty degrees; or
the second pivot angle (76) is between twenty degrees and forty-five degrees.

11. The system of claim 10, wherein the second actuation system (80B) is configured to:
lock the third section (54) in the first position (72); and
pivot the third section (54) between the first position (72) and the second position (74).

12. The system of claim 10 or 11, wherein the second section (52) is arranged in-line with and fixed to first section (50) when the third section (54) pivots between the first position (72) and the second position (74).

13. The system of any of claims 10 to 12, wherein the second actuation system (80B) is configured to damp pivoting of the third section (54) about the second hinge line (58).

14. An aircraft, comprising:
the system of any preceding claim; and
an actuation system (78) configured to:
actively pivot the second section (52) about the first hinge line (56) during a first mode while the third section (54) is fixed to the second section (52) and the aircraft (20) is on ground; and
passively pivot the third section (54) about the second hinge line (58) during a second mode while the second section (52) is fixed to the first section (50) and the aircraft (20) is in flight.

15. A method for operating an aircraft, comprising:
the aircraft (20) including an aircraft fuselage (22) extending longitudinally along a centerline (30) and an aircraft wing (24) connected to and projecting spanwise from the aircraft fuselage (22) to a wing tip (34);
the aircraft wing (24) including a first section (50), a second section (52) and a third section (54), the second section (52) spanwise between the third section (54) and the first section (50), the first section (50) projecting spanwise out from the aircraft fuselage (22) and supported by a truss brace (38), the truss brace (38) extending between and connected to the first section (50) and the fuselage (22), the second section (52) pivotable about a first hinge line (56), and the third section (54) pivotable about a second hinge line (58);
pivoting the second section (52) about the first hinge line (56) and relative to the first section (50) during a first mode while the third section (54) is fixed relative to the second section (52) and the aircraft (20) is on ground; and
pivoting the third section (54) about the second hinge line (58) and relative to the second section (52) during a second mode while the second section (52) is fixed to the first section (50) and the aircraft (20) is in flight.

## Patentansprüche

1. System für ein Flugzeug, umfassend:
einen Flugzeugrumpf (22), der sich in Längsrichtung entlang einer Mittellinie (30) erstreckt; und
einen Flugzeugflügel (24), der mit dem Flugzeugrumpf (22) verbunden ist und sich von diesem in Spannweitenrichtung von einer Flügelbasis (36) zu einer Flügelspitze (34) erstreckt, wobei sich der Flugzeugflügel (24) in Profilsehnenrichtung von einer Vorderkante (42) zu einer Hinterkante (44) erstreckt, sich der Flugzeugflügel (24) seitlich zwischen einer ersten Oberfläche (46) und einer zweiten Oberfläche (48) erstreckt und der Flugzeugflügel (24) einen ersten Teilabschnitt (50), einen zweiten Teilabschnitt (52) und einen dritten Teilabschnitt (54) einschließt;
wobei der erste Teilabschnitt (50) in Spannweitenrichtung von dem Flugzeugrumpf (22) heraus vorsteht;
wobei sich der zweite Teilabschnitt (52) in Spannweitenrichtung zwischen dem dritten Teilabschnitt (54) und dem ersten Teilabschnitt (50) erstreckt und diese verbindet, wobei der zweite Teilabschnitt (52) an einer ersten Scharnierachse (56) schwenkbar mit dem ersten Teilabschnitt (50) verbunden ist; und
wobei der dritte Teilabschnitt (54) schwenkbar mit dem zweiten Teilabschnitt (52) an einer zweiten Scharnierachse (58) verbunden ist, die von der ersten Scharnierachse (56) um einen ersten spitzen Winkel (62) angewinkelt versetzt ist; **dadurch gekennzeichnet, dass** der erste Teilabschnitt (50) von einer Fachwerkstrebe (38) gestützt wird, wobei sich die Fachwerkstrebe (38) zwischen dem ersten Teilabschnitt (50) und dem Rumpf (22) erstreckt und mit diesen verbunden ist.

2. System nach Anspruch 1, wobei der erste spitze Winkel (62) kleiner als 15 Grad ist.

3. System nach Anspruch 1, wobei der erste spitze Winkel (62) zwischen 15 Grad und 30 Grad ist.

4. System nach Anspruch 1, wobei der erste spitze Winkel (62) größer als 30 Grad ist.

5. System nach einem der vorhergehenden Ansprüche, wobei die erste Scharnierachse (56) parallel zu der Mittellinie (30) angeordnet ist.

6. System nach einem der vorhergehenden Ansprüche, wobei die zweite Scharnierachse (58) um einen zweiten spitzen Winkel (60) von der Mittellinie (30) angewinkelt versetzt ist, wobei der zweite spitze Winkel (60) optional gleich dem ersten spitzen Winkel (62) ist.

7. System nach einem der vorhergehenden Ansprüche, ferner umfassend ein erstes Betätigungssystem (80A), das konfiguriert ist, um den zweiten Teilabschnitt (52) um die erste Scharnierachse (56) zwischen einer ersten Position (66) und einer zweiten Position (68) zu schwenken, wobei:
der zweite Teilabschnitt (52) in einer Linie mit dem ersten Teilabschnitt (50) angeordnet ist, wenn der zweite Teilabschnitt (52) in der ersten Position (66) ist; und
der zweite Teilabschnitt (52) um einen ersten Schwenkwinkel (70) von dem ersten Teilabschnitt (50) angewinkelt versetzt ist, wenn der zweite Teilabschnitt (52) in der zweiten Position (68) ist, wobei optional:
der erste Schwenkwinkel (70) zwischen 30 Grad und 70 Grad ist; oder
der erste Schwenkwinkel (70) zwischen 70 Grad und 110 Grad ist.

8. System nach Anspruch 7, wobei das erste Betätigungssystem (80A) konfiguriert ist, um den zweiten Teilabschnitt (52) in der ersten Position (66) und/oder der zweiten Position (68) zu verriegeln.

9. System nach Anspruch 7 oder 8, wobei der dritte Teilabschnitt (54) in einer Linie mit dem zweiten Teilabschnitt (52) angeordnet und an diesem befestigt ist, wenn der zweite Teilabschnitt (52) zwischen der ersten Position (66) und der zweiten Position (68) schwenkt.

10. System nach einem der vorhergehenden Ansprüche, ferner umfassend ein zweites Betätigungssystem (80B), das konfiguriert ist, um ein Schwenken des dritten Teilabschnitts (54) um die zweite Scharnierachse (58) zwischen einer ersten Position (72) und einer zweiten Position (74) zu ermöglichen, wobei:
der dritte Teilabschnitt (54) in einer Linie mit dem zweiten Teilabschnitt (52) angeordnet ist, wenn der dritte Teilabschnitt (54) in der ersten Position (72) ist; und
der dritte Teilabschnitt (54) um einen zweiten Schwenkwinkel (76) von dem zweiten Teilabschnitt (52) angewinkelt versetzt ist, wenn der dritte Teilabschnitt (54) in der zweiten Position (74) ist, wobei optional:
der zweite Schwenkwinkel (76) zwischen 5 Grad und 20 Grad ist; oder
der zweite Schwenkwinkel (76) zwischen 20 Grad und 45 Grad ist.

11. System nach Anspruch 10, wobei das zweite Betätigungssystem (80B) konfiguriert ist, um:
den dritten Teilabschnitt (54) in der ersten Position (72) zu verriegeln; und
den dritten Teilabschnitt (54) zwischen der ersten Position (72) und der zweiten Position (74) zu schwenken.

12. System nach Anspruch 10 oder 11, wobei der zweite Teilabschnitt (52) in einer Linie mit dem ersten Teilabschnitt (50) angeordnet und an diesem befestigt ist, wenn der dritte Teilabschnitt (54) zwischen der ersten Position (72) und der zweiten Position (74) schwenkt.

13. System nach einem der Ansprüche 10 bis 12, wobei das zweite Betätigungssystem (80B) konfiguriert ist, um ein Schwenken des dritten Teilabschnitts (54) um die zweite Scharnierachse (58) zu dämpfen.

14. Flugzeug, umfassend:
das System nach einem der vorhergehenden Ansprüche; und
ein Betätigungssystem (78), das konfiguriert ist, um:
den zweiten Teilabschnitt (52) in einem ersten Modus aktiv um die erste Scharnierachse (56) zu schwenken, während der dritte Teilabschnitt (54) an dem zweiten Teilabschnitt (52) befestigt ist und das Flugzeug (20) am Boden ist; und
den dritten Teilabschnitt (54) in einem zweiten Modus passiv um die zweite Scharnierachse (58) zu schwenken, während der zweite Teilabschnitt (52) an dem ersten Teilabschnitt (50) befestigt ist und das Flugzeug (20) im Flug ist.

15. Verfahren zum Betreiben eines Flugzeugs, umfassend:
das Flugzeug (20), einschließlich eines Flugzeugrumpfes (22),
der sich in Längsrichtung entlang einer Mittellinie (30) erstreckt, und eines Flugzeugflügels (24), der mit dem Flugzeugrumpf (22) verbunden ist und von diesem in Spannweitenrichtung zu einer Flügelspitze (34) vorsteht;
den Flugzeugflügel (24), einschließlich eines ersten Teilabschnitts (50), eines zweiten Teilabschnitts (52) und eines dritten Teilabschnitts (54), wobei sich der zweite Teilabschnitt (52) in Spannweitenrichtung zwischen dem dritten Teilabschnitt (54) und dem ersten Teilabschnitt (50) erstreckt, der erste Teilabschnitt (50) in Spannweitenrichtung von dem Flugzeugrumpf (22) heraus vorsteht und von einer Fachwerkstrebe (38) gestützt wird, sich die Fachwerkstrebe (38) zwischen dem ersten Teilabschnitt (50) und dem Rumpf (22) erstreckt und mit diesen verbunden ist, der zweite Teilabschnitt (52) um eine erste Scharnierachse (56) schwenkbar ist und der dritte Teilabschnitt (54) um eine zweite Scharnierachse (58) schwenkbar ist;
Schwenken des zweiten Teilabschnitts (52) um die erste Scharnierachse (56) und relativ zu dem ersten Teilabschnitt (50) in einem ersten Modus, während der dritte Teilabschnitt (54) relativ zu dem zweiten Teilabschnitt (52) befestigt ist und das Flugzeug (20) am Boden ist; und
Schwenken des dritten Teilabschnitts (54) um die zweite Scharnierachse (58) und relativ zu dem zweiten Teilabschnitt (52) in einem zweiten Modus, während der zweite Teilabschnitt (52) an dem ersten Teilabschnitt (50) befestigt ist und das Flugzeug (20) im Flug ist.

## Revendications

1. Système pour un aéronef, comprenant :
un fuselage d'aéronef (22) s'étendant longitudinalement le long d'une ligne centrale (30) ; et
une aile d'aéronef (24) reliée et s'étendant dans le sens de l'envergure depuis le fuselage de l'aéronef (22) d'une base d'aile (36) à une extrémité d'aile (34), l'aile d'aéronef (24) s'étendant dans le sens de la corde depuis un bord d'attaque (42) à un bord de fuite (44), l'aile d'aéronef (24) s'étendant latéralement entre une première surface (46) et une seconde surface (48), et l'aile d'aéronef (24) incluant une première section (50), une deuxième section (52) et une troisième section (54) ;
la première section (50) faisant saillie dans le sens de l'envergure depuis le fuselage de l'aéronef (22) ;
la deuxième section (52) s'étendant dans le sens de l'envergure entre et reliant la troisième section (54) et la première section (50), la deuxième section (52) étant reliée de manière pivotante à la première section (50) au niveau d'une première ligne d'articulation (56) ; et
la troisième section (54) étant reliée de manière pivotante à la deuxième section (52) au niveau d'une deuxième ligne d'articulation (58) qui est décalée angulairement depuis la première ligne d'articulation (56) par un premier angle aigu (62) ; **caractérisée en ce que** la première section (50) est supportée par une entretoise en treillis (38), l'entretoise en treillis (38) s'étendant entre et étant reliée à la première section (50) et au fuselage (22).

2. Système selon la revendication 1, dans lequel le premier angle aigu (62) est inférieur à quinze degrés.

3. Système selon la revendication 1, dans lequel le premier angle aigu (62) est compris entre quinze degrés et trente degrés.

4. Système selon la revendication 1, dans lequel le premier angle aigu (62) est supérieur à trente degrés.

5. Système selon une quelconque revendication précédente, dans lequel la première ligne d'articulation (56) est disposée parallèlement à la ligne centrale (30).

6. Système selon une quelconque revendication précédente, dans lequel la seconde ligne d'articulation (58) est décalée angulairement par rapport à la ligne centrale (30) d'un second angle aigu (60), éventuellement dans lequel le second angle aigu (60) est égal au premier angle aigu (62).

7. Système selon une quelconque revendication précédente, comprenant en outre un premier système d'actionnement (80A) configuré pour faire pivoter la deuxième section (52) autour de la première ligne d'articulation (56) entre une première position (66) et une seconde position (68), dans lequel :
la deuxième section (52) est alignée avec la première section (50) lorsque la deuxième section (52) se trouve dans la première position (66) ; et
la deuxième section (52) est décalée angulairement par rapport à la première section (50) d'un premier angle de pivotement (70) lorsque la deuxième section (52) se trouve dans la seconde position (68), éventuellement dans laquelle :
le premier angle de pivotement (70) est compris entre trente degrés et soixante-dix degrés ; ou
le premier angle de pivotement (70) est compris entre soixante-dix degrés et cent dix degrés.

8. Système selon la revendication 7, dans lequel le premier système d'actionnement (80A) est configuré pour verrouiller la deuxième section (52) dans la première position (66) et/ou la seconde position (68).

9. Système selon la revendication 7 ou 8, dans lequel la troisième section (54) est alignée avec et fixée à la deuxième section (52) lorsque la deuxième section (52) pivote entre la première position (66) et la seconde position (68).

10. Système selon une quelconque revendication précédente, comprenant en outre un second système d'actionnement (80B) configuré pour faciliter le pivotement de la troisième section (54) autour de la seconde ligne d'articulation (58) entre une première position (72) et une seconde position (74), dans lequel :
la troisième section (54) est alignée avec la deuxième section (52) lorsque la troisième section (54) se trouve dans la première position (72) ; et
la troisième section (54) est décalée angulairement par rapport à la deuxième section (52) d'un second angle de pivotement (76) lorsque la troisième section (54) se trouve dans la seconde position (74), éventuellement dans laquelle :
le second angle de pivotement (76) est compris entre cinq degrés et vingt degrés ; ou
le second angle de pivotement (76) est compris entre vingt degrés et quarante-cinq degrés.

11. Système selon la revendication 10, dans lequel le second système d'actionnement (80B) est configuré pour :
verrouiller la troisième section (54) dans la première position (72) ; et
pivoter la troisième section (54) entre la première position (72) et la seconde position (74).

12. Système selon la revendication 10 ou 11, dans lequel la deuxième section (52) est alignée avec la première section (50) et fixée à celle-ci, lorsque la troisième section (54) pivote entre la première position (72) et la seconde position (74).

13. Système selon l'une quelconque des revendications 10 à 12, dans lequel le second système d'actionnement (80B) est configuré pour amortir le pivotement de la troisième section (54) autour de la seconde ligne d'articulation (58).

14. Aéronef, comprenant :
le système selon une quelconque revendication précédente ; et
un système d'actionnement (78) configuré pour :
faire pivoter activement la deuxième section (52) autour de la première ligne d'articulation (56) pendant un premier mode,
tandis que la troisième section (54) est fixée à la deuxième section (52) et que l'aéronef (20) est au sol ; et
faire pivoter passivement la troisième section (54) autour de la deuxième ligne d'articulation (58) pendant un second mode,
tandis que la deuxième section (52) est fixée à la première section (50) et que l'aéronef (20) est en vol.

15. Procédé de fonctionnement d'un aéronef comprenant :
l'aéronef (20) incluant un fuselage d'aéronef (22) s'étendant longitudinalement le long d'une ligne centrale (30) et une aile d'aéronef (24) reliée et faisant saillie dans le sens de l'envergure depuis le fuselage d'aéronef (22) à une extrémité d'aile (34) ;
l'aile d'aéronef (24) incluant une première section (50), une deuxième section (52) et une troisième section (54), la deuxième section (52) étant située dans le sens de l'envergure entre la troisième section (54) et la première section (50), la première section (50) faisant saillie dans le sens de l'envergure depuis le fuselage d'aéronef (22) et soutenue par une entretoise en treillis (38), l'entretoise en treillis (38) s'étendant entre la première section (50) et le fuselage (22), et reliée à ceux-ci, la deuxième section (52) pouvant pivoter autour d'une première ligne d'articulation (56), et la troisième section (54) pouvant pivoter autour d'une seconde ligne d'articulation (58) ;
le pivotement de la deuxième section (52) autour de la première ligne d'articulation (56) et par rapport à la première section (50) pendant un premier mode, tandis que la troisième section (54) est fixée à la deuxième section (52), lorsque l'aéronef (20) est au sol ; et
le pivotement de la troisième section (54) autour de la seconde ligne d'articulation (58) et par rapport à la deuxième section (52) pendant un second mode, tandis que la deuxième section (52) est fixée à la première section (50), lorsque l'aéronef (20) est en vol.
